# EUROPEAN PATENT SPECIFICATION

(11) **EP 3 905 789 B1**
(45) Date of publication and mention of the grant of the patent: **21.08.2024**
(21) Application number: 20741074.7
(22) Date of filing: 09.01.2020
(51) Int. Cl.: H04W 48/04, H04W 36/32, H04W 48/16, H04W 4/029, H04M 1/72454, H04W 36/14, H04W 36/18, H04W 36/30, H04W 36/24, H04W 48/18, H04W 36/36, H04W 36/00, H04L 67/50, H04W 4/02

(54) **METHOD FOR CALL PROCESSING AND RELATED PRODUCTS**
VERFAHREN ZUR ANRUFVERARBEITUNG UND ENTSPRECHENDE PRODUKTE
PROCÉDÉ DE TRAITEMENT D'APPEL ET PRODUITS ASSOCIÉS

(30) Priority: 14.01.2019 CN 201910035117
(43) Date of publication of application: 03.11.2021
(73) Proprietor: GUANGDONG OPPO MOBILE TELECOMMUNICATIONS CORP., LTD., Dongguan, Guangdong 523860 (CN)
(72) Inventor: HUANG, Yuan, Dongguan,Guangdong 523860 (CN)
(74) Representative: Manitz Finsterwald Patent- und Rechtsanwaltspartnerschaft mbB
(86) International application number: PCT/CN2020/071255
(87) International publication number: WO 2020/147648

(56) References cited:
- EP-A1- 3 448 114
- EP-A1- 3 793 256
- EP-A1- 3 793 256
- WO-A1-2017/204539
- WO-A1-2019/227350
- CN-A- 102 547 833
- CN-A- 103 428 628
- CN-A- 104 540 157
- CN-A- 105 682 160
- CN-A- 106 850 939
- CN-A- 107 466 015
- CN-A- 108 650 616
- CN-A- 108 702 670
- CN-A- 109 548 106
- CN-A- 109 640 380
- US-A1- 2016 345 341
- US-A1- 2021 211 946
- US-B1- 7 076 245
- US-B2- 9 699 799

## Description

### TECHNICAL FIELD

This disclosure relates to the technical field of electronic devices, and more particularly to a method for call processing and related products.

### BACKGROUND

With the rapid popularization of electronic devices (such as mobile phones, tablet computers, etc.), making a call to communicate with others is adopted by an increasing number of users, and therefore how to improve the call quality is a technical problem to be solved by those skilled in the art.

### SUMMARY

The present invention is defined in the independent claims. According to a first aspect, implementations of the disclosure provide a method for call processing according to the subject-matter of claim 1.

According to a second aspect, implementations of the disclosure provide an electronic device according to the subject-matter of claim 9. The electronic device includes a processor, a communication interface, and a memory storing one or more programs. The one or more programs are configured to be executed by the processor, and include instructions for performing all or part of operations of the method described in the first aspect.

According to a third aspect, implementations of the disclosure provide a computer-readable storage medium according to the subject-matter of claim 10. The computer-readable storage medium stores computer programs which, when executed by a computer, are operable with the computer to perform all or part of operations of the method described in the first aspect.

According to a fourth aspect, implementations of the disclosure provide a computer program product according to the subject-matter of claim 11. The computer program product includes a non-transitory computer-readable storage medium storing a computer program. The computer program is operable to cause a computer to perform all or part of the operations described in the first aspect. The computer program product may be a software installation package.

### BRIEF DESCRIPTION OF THE DRAWINGS

To describe the technical solutions of the implementations of the disclosure more clearly, the following will give a brief description of accompanying drawings used for describing the implementations of the disclosure. Apparently, the accompanying drawings described in the following are merely some implementations of the disclosure. Those of ordinary skill in the art can also obtain other accompanying drawings based on the accompanying drawings described below without creative efforts.
FIG. 1 is a schematic flow chart illustrating a method for call processing
FIG. 2 is a network architecture diagram illustrating a call connection system according to implementations of the disclosure.
FIG. 3 is a schematic diagram illustrating a principle of a three-axis acceleration sensor
FIG. 4 is a schematic structural diagram illustrating an electronic device according to implementations of the disclosure.
FIG. 5 is a schematic structural diagram illustrating a device for call processing according to not claimed implementations of the disclosure.

### DETAILED DESCRIPTION

In order to enable those skilled in the art to better understand solutions of the disclosure, technical solutions embodied in implementations of the disclosure will be described in a clear and comprehensive manner in conjunction with the accompanying drawings. It is evident that the implementations described herein are merely some rather than all the implementations of the disclosure. All other implementations obtained by those of ordinary skill in the art based on the implementations of the disclosure without creative efforts shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "implementation" referred to herein means that a particular feature, structure, or feature described in conjunction with the implementation may be contained in at least one implementation of the disclosure. The phrase appearing in various places in the specification does not necessarily refer to the same implementations, nor does it refer to an independent or alternative implementation that is mutually exclusive with other implementations. It is expressly and implicitly understood by those skilled in the art that an implementation described herein may be combined with other implementations.

The electronic devices involved in the implementations of the disclosure may include various handheld devices, vehicle-mounted devices, wireless headphones, computing devices that have wireless communication functions or other processing devices connected to wireless modems, as well as various forms of user equipment (UE), mobile stations (MS), terminal devices, and the like, and the like. The electronic device may be, for example, a smart phone, a tablet computer, an earphone box, and the like. For convenience of description, the devices mentioned above are collectively referred to as the electronic devices. The following describes the implementations of the disclosure in detail.

The implementations of the disclosure provide a method for call processing and related products, which can improve call quality.

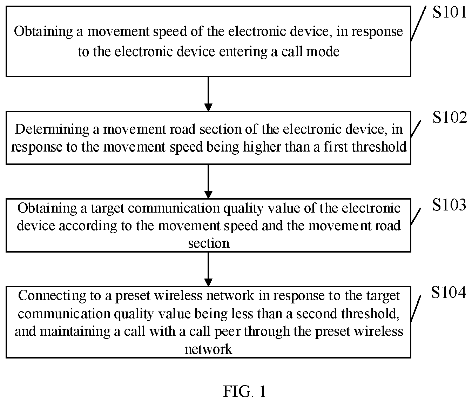

FIG. 1 is a schematic flow chart illustrating a method for call processing according to implementations of the disclosure. The method is applicable to an electronic device. The electronic device can adopt link aggregation technology. The link aggregation technology refers to that the electronic device is able to use two or more network ports to access the internet at the same time. For example, with aid of the link aggregation technology, a mobile phone is able to use both a wireless-fidelity (Wi-Fi) network and a mobile data network to access the network. The Wi-Fi network is also called a wireless network.

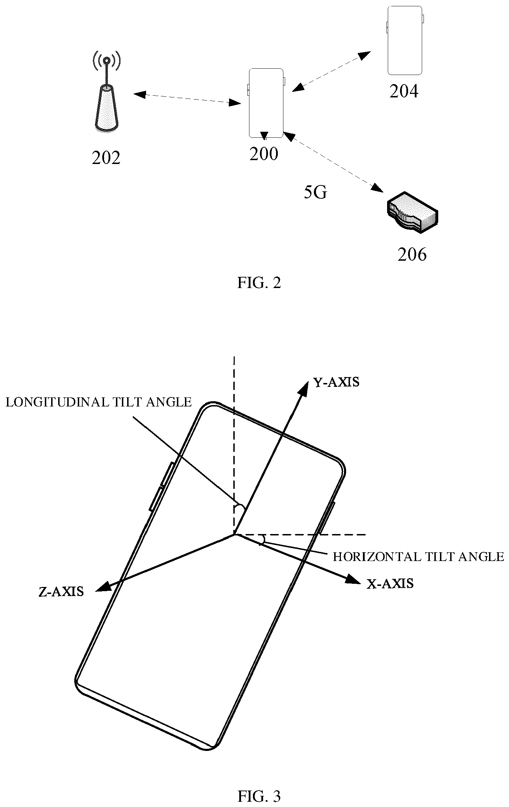

There is no restriction on types of networks to which the electronic device connects. As illustrated in the network architecture diagram of FIG. 2, an electronic device 200 connects to a mobile data network provided by a first base station 202. The mobile data network may include networks of different frequency bands. For example, the mobile data network includes the 2-generation wireless telephone technology (2G) network, the 3rd-generation wireless telephone technology (3G) network, the 4th generation mobile communication technology (4G) network, the 5th generation mobile communication technology (5G) network, or the like. The electronic device 200 can also connect to wireless networks provided by different devices. For example, the electronic device 200 can connect to a Wi-Fi network or a Bluetooth network provided by a first hotspot device 204, or can connect to a Wi-Fi network of 2.4GHz or a Wi-Fi network of 5GHz provided by a first router 206.

For the security of a wireless network, an authentication procedure is provided. That is, when the electronic device attempts to connect to the wireless network, the wireless network verifies an identity of the electronic device. When the verification passes, the electronic device connects to the wireless network. For example, if a wireless network is named "sanhuan" and an authentication password of the wireless network is "65498231", the electronic device connects to the wireless network only when the electronic device submits "65498231".

As illustrated in FIG. 1, a method for call processing is provided. The method begins at S101.

At S101, a movement speed of the electronic device is obtained, in response to the electronic device entering a call mode.

In one example, the "call" refers to a situation where the electronic device is a calling party, a call peer is a called party, and a call connection is established between the electronic device and the call peer, or a situation where the call peer is the calling party, the electronic device is the called party, and the call connection is established between the electronic device and the call peer. The call may be a call based on a mobile operator, or a call established through an instant messaging software. That is, the call can be conducted through a mobile data network or a wireless network. The call may be a voice call or a video call, etc., which is not limited herein.

There is no restriction on the method for detecting the movement speed of the electronic device. As one example, the movement speed of the electronic device is detected through a three-axis acceleration sensor. The three-axis acceleration sensor has a small size and is light. The three-axis acceleration sensor can measure a spatial acceleration and is used to measure a posture and a tilt angle of the electronic device. In addition to automatically measuring horizontal and vertical viewing angles, the three-axis acceleration sensor can also be used for motion offset compensation calculation when global positioning system (GPS) signals are not good, which can fully and accurately reflect motion properties of objects.

FIG. 3 is a schematic diagram illustrating the principle of the three-axis acceleration sensor according to implementations of the disclosure. As illustrated in FIG. 3, the x-axis, y-axis, and z-axis are all defined relative to the body of the electronic device. For example, an upward direction along the body is defined as the y-axis, a direction to the right along the body is defined as the x-axis, and a direction perpendicular to a front surface of the body of the electronic device is defined as the z-axis. Generally, a horizontal component, a longitudinal component, and a vertical component each are a projection of a unit of gravity (a magnitude of the gravity is 1g (m*m/s) and a direction of the gravity is perpendicular to the ground and downward) on the respective axes. A horizontal tilt angle of the electronic device is an angle between the x-axis and a horizontal plane, and a longitudinal tilt angle of the electronic device is an angle between the y-axis and a vertical plane. The usage posture of the electronic device is determined by the horizontal tilt angle, the longitudinal tilt angle, and the vertical component.

For example, when the electronic device is placed flatly on a desktop, a component in the x-axis direction is 0 by default, a component in the y-axis direction is 0 by default, and a component in the z-axis direction is 9.81 by default. When the electronic device is placed on the desktop and the front surface of the electronic device faces down, a component in the z-axis direction is -9.81. When the electronic device is tilted to the left, a component in the x-axis direction is a positive value. When the electronic device is tilted to the right, a component in the x-axis direction is a negative value. When the electronic device is tilted upward, a component in the y-axis direction is a negative value. When the electronic device is tilted downward, a component in the y-axis direction is a positive value. In one example, if the component in the z-axis direction is less than -3, it is considered that a display screen of the electronic device faces downwards.

It can be understood that the posture and the tilt angle of the electronic device are detected through the above-mentioned three-axis acceleration sensor, and then the movement speed of the electronic device can be determined according to a variation of the posture and the tilt angle. That is, the movement speed of the electronic device can be determined through an internal sensor of the electronic device, such that the movement speed of the electronic device can be accurately determined in real time.

As another example, a movement distance of the electronic device in a specified duration is obtained. The movement speed of the electronic device is obtained according to the movement distance and the specified duration.

The movement distance can be obtained through a positioning module or a ranging module. Alternatively, a target image or a target video is captured by a camera, and a distance between the electronic device and a fixed position in the target image can be determined according to the target image. Alternatively, the movement distance can also be obtained through a neighbor aware networking (NAN) connection established between the electronic device and a neighboring device. The disclosure is not limited thereto.

The ranging module may be an ultrasonic ranging sensor, a laser ranging sensor, an infrared ranging sensor, a radar sensor, or other ranging sensors. A relative distance between the electronic device and the neighboring device is directly determined according to respective ranging principles of those sensors. The disclosure is not limited thereto.

The NAN is also called Wi-Fi alliance. The NAN is mainly used to realize real-time and high-efficient discovery mechanism, i.e., to continuously discover devices and services within the Wi-Fi range. The NAN is a quick-sensing networking mode, that is, a NAN network can be established without being connected to a mobile wideband network or a Wi-Fi infrastructure network, thereby expanding Wi-Fi functions and improving user experience.

The specified duration is relatively short, for example, may be one minute, five minutes, or the like.

The movement distance of the electronic device within the specified duration is determined, then the movement speed is calculated according to the movement distance and the specified duration, and thus the movement speed can be accurately determined in real time.

At S 102, if the movement speed is higher than a first threshold, a movement road section of the electronic device is determined.

There is no restriction on the first threshold. When the movement speed is higher than the first threshold, it is determined that the electronic device is in a high-speed movement state. In order to avoid communication interruption or poor communication caused by the high-speed movement, the movement road section of the electronic device is obtained, to determine whether there is a communication failure when the electronic device moves on the movement road section at the movement speed.

In one example, the movement road section is a road section on which the electronic device may move, such as part of a navigation route, a road section frequently visited by a user, or the like. There is no restriction on the method for determining the movement road section of the electronic device. In at least one implementation, the method further includes the following. A current position of the electronic device and current time are obtained. Multiple historical movement trajectories that correspond to the current position and the current time are obtained. The movement road section of the electronic device is determined according to the multiple historical movement trajectories.

In one example, the current time can be obtained through a time manager of the electronic device, and the current position can be obtained through the positioning module of the electronic device. The positioning module may be a GPS module or a wireless local area networks (WLAN) module. Since to a certain extent a network rate can reflect a distance between the electronic device and a network device to which the electronic device connects, the current position of the electronic device can be determined according to a position of the network device and the distance between the electronic device and the network device or a network rate at which the electronic device finds the network device.

The GPS module uses GPS positioning satellites to locate and navigate in real time around the world. The WLAN module uses radio frequency technology and electromagnetic waves to realize air communication, whose positioning method depends on a hotspot device (such as a wireless router or an electronic device that provides a hotspot) to which the electronic device connects.

In the implementation, the historical movement trajectories are historical movement road sections that correspond to the current time and current position. For example, during working, the historical movement trajectory may be an activity area of an office. During off work, the historical movement trajectory may be a road section from a company to the home. During the holiday, the historical movement trajectory may be an activity area at home or a shopping center frequently visited.

It can be understood that the current position of the electronic device and current time are first determined, then the multiple historical movement trajectories that correspond to the current position and the current time are determined, and finally the movement road section of the electronic device is determined according to the multiple historical movement trajectories. That is to say, it is possible to determine a movement road section of the electronic device in the current state according to the historical movement trajectories of the electronic device, which helps to accurately determine the movement road section.

At S103, a target communication quality value of the electronic device is obtained according to the movement speed and the movement road section.

The target communication quality value is a signal strength estimated when the electronic device moves on the movement road section at the movement speed, that is, the ability to receive and transmit signals.

According to the first aspect, the target communication quality value of the electronic device is obtained according to the movement speed and the movement road section as follows. A first communication quality value of the electronic device on the movement road section is obtained. A communication signal influence value is obtained according to the movement speed. A product of the first communication quality value and the communication signal influence value is determined as the target communication quality value.

The first communication quality value is a communication quality value of the electronic device on the movement road section. The first communication quality value can be determined according to historical connection records of the electronic device on the movement road section. For example, the first communication quality value is obtained by weighting an evaluation value of each of multiple communication dimension information (such as a communication duration, a communication network rate, a communication drop rate, and the like) and a corresponding weight pre-stored. The evaluation value of each communication dimension information can be determined according to a ratio of data corresponding to the communication dimension information of the electronic device on the movement road section to the overall data. For example, if the communication drop rate of the electronic device on the movement road section is 20%, and a communication drop rate corresponding to the electronic device is 10%, the evaluation value of the communication drop rate of the electronic device on the movement road section is determined to be 25. Since the evaluation value and the corresponding weight of each communication dimension information are taken into consideration, the accuracy of the determined first communication quality value can be improved.

The communication signal influence value refers to a value indicative of an influence of the movement speed on a communication signal of the electronic device. It can be understood that the base station or the wireless device has a fixed position, and when the electronic device moves at different movement speeds, for example, when the electronic device is on a high-speed train, it is difficult to ensure the stability of the communication signal.

In the implementation, the first communication quality value of the electronic device on the movement road section is determined, the communication signal influence value is estimated according to the movement speed of the electronic device, and then the product of the first communication quality value and the communication signal influence value is determined as the target communication quality value. Since in the implementation, the influence of the movement speed on the communication signal is considered, the accuracy of the estimated target communication quality value can be improved.

There is no restriction on the method for obtaining the first communication quality value. In at least one implementation, the electronic device includes multiple antennas, and the first communication quality value of the electronic device on the movement road section is obtained as follows. A performance parameter of each of the multiple antennas is obtained, and multiple performance parameters are obtained. An environment parameter of the movement road section is obtained. A matching value between each of the multiple performance parameters and the environment parameter is obtained, and multiple matching values are obtained. The first communication quality value is obtained according to the multiple matching values.

The multiple antennas may include patch antennas, flexible printed circuit (FPC) antennas, laser direct structuring (LDS)-based antennas, print direct structuring (PDS)-based antennas, or the like. The multiple antennas may include antennas supporting 2G, 3G, 4G, or 5G frequency bands, or can also include Wi-Fi antennas, GPS antennas, or Bluetooth antennas. The disclosure is not limited thereto.

The performance parameter(s) may include at least one of the following: a network drop rate, a network rate, a received signal strength, a transmit power, or other communication dimension information. The disclosure is not limited thereto.

The environment parameter(s) may include the number, positions, or transmit power of base stations or wireless devices on the movement road section. The positions of the base stations and the wireless devices are fixed, that is, the base stations or the wireless devices are fixed on or near the movement road section. If the base station or the wireless device is located near the movement road section, the environment parameter(s) further include(s) a distance between the base station or the wireless device and the movement road section, and a signal attenuation corresponding to the distance. The disclosure is not limited thereto.

The matching value is used for describing a matching degree between the performance parameter of the antenna and the environment parameter, that is, a probability that the antenna is suitable for use on the movement road section.

There is no restriction on the method for obtaining the first communication quality value according to the multiple matching values. The first communication quality value is obtained according to the performance parameter of one of the multiple antennas, where the matching value between the performance parameter of the one of the multiple antennas and the environment parameter is a maximum matching value among the multiple matching values. Alternatively, multiple-input multiple-output antennas corresponding to even number of antennas can be determined, and for each antenna, a weight is determined according to the matching value between the performance parameter of the antenna and the environment parameter. Thereafter, a weighted calculation is performed on the weight and the performance parameter of each antenna to obtain the first communication quality value. In this way, the communication quality can be improved.

It can be understood that the performance parameter of each antenna is obtained to obtain the multiple performance parameters, and the environment parameter of the movement road section is obtained. Thereafter, the matching value between each performance parameter and the environment parameter is obtained to obtain the multiple matching values. That is, the matching value between each antenna and the movement road section is obtained. The first communication quality value is obtained according to the multiple matching values. Since the first communication quality value is obtained according to the matching value between the performance parameter of each antenna on the movement road section and the environment parameter of the movement road section, the accuracy of the obtained first communication quality value can be improved.

At S104, if the target communication quality value is less than a second threshold, the electronic device connects to a preset wireless network and maintains a call with a call peer through the preset wireless network.

In the disclosure there is no limitation on the second threshold. The second threshold can be determined according to a minimum communication quality value currently required by the electronic device.

The preset wireless network may be a candidate wireless network on the movement road section. There is no restriction on the method for determining the preset wireless network. In at least one implementation, the following can be conducted. Multiple reference wireless networks are obtained, where the multiple reference wireless networks are scheduled for connecting with the electronic device. A communication quality value of each of the multiple reference wireless networks is obtained, and multiple second communication quality values are obtained. One of the multiple reference wireless networks is determined as the preset wireless network, where the communication quality value of the one of the multiple reference wireless networks is maximum among the multiple second communication quality values.

The reference wireless network is a secure network that has been successfully verified or does not need to be verified on the movement road section. The secure network may be a network that has not been registered in a preset database.

The second communication quality value is indicative of communication quality of each reference wireless network on the movement road section. For the manner in which the second communication quality value is obtained, reference can be made to that the manner in which the first communication quality value is obtained, which are not repeated herein.

In the implementation, the multiple reference wireless networks are obtained, where the multiple reference wireless networks are scheduled for connecting with the electronic device, and the communication quality value of each reference wireless network is obtained to obtain multiple second communication quality values. Thereafter, one of the multiple reference wireless networks is determined as the preset wireless network, where the communication quality value of the one of the multiple reference wireless networks is the maximum second communication quality value among the multiple second communication quality values. In this way, it is possible to improve the effectiveness of the call maintained by the electronic device connecting to the preset wireless network.

In the disclosure, there is no limitation on the method for determining the second communication quality value. In at least one implementation, the communication quality value of each of the multiple reference wireless networks is obtained to obtain the multiple second communication quality values as follows. A relative distance between a network device corresponding to each of the multiple reference wireless networks and the electronic device is obtained, and multiple relative distances are obtained. A network rate range of each of the multiple reference wireless networks is obtained according to the multiple relative distances, and multiple network rate ranges are obtained. The multiple second communication quality values are obtained according to the multiple network rate ranges.

As can be seen, the relative distance between the network device corresponding to each reference wireless network and the electronic device is obtained to obtain the multiple relative distances, and the network rate range of each reference wireless network is obtained according to the multiple relative distances to obtain multiple network rate ranges. The second communication quality value of each reference wireless network is obtained according to the multiple network rate ranges. In this way, the communication quality value is obtained by considering the influence of the relative distance between the network device and the electronic device on the network, which can improve the accuracy of the obtained second communication quality value.

There is no restriction on the method for obtaining the relative distance between the network device and the electronic device. In one example, the electronic device can establish a NAN network connection with a network device corresponding to a target wireless network, where the target wireless network is any reference wireless network among the multiple reference wireless networks. The relative distance between the network device corresponding to the target wireless network and the electronic device can be detected based on the distance measurement manner (ranging) of the NAN.

The target wireless network is any reference wireless network among the multiple reference wireless networks.

The NAN is also called Wi-Fi alliance. The following uses the NAN for illustration. The NAN is mainly used to realize real-time efficient discovery mechanism, thereby expanding Wi-Fi functions and improving user experience.

Based on the distance measurement manner (ranging) of the NAN, a distance between devices that establish the NAN network connection is detected. The relative distance can be obtained by the electronic device or the network device. The disclosure is not limited thereto.

The following describes the target wireless network as an example of the reference wireless network. For a manner in which a relative distance between another reference wireless network and the electronic device is obtained, reference can be made to the above manner, which are not be repeated herein. If the network device corresponding to the target wireless network establishes the NAN network connection with the electronic device, the electronic device can obtain the relative distance between the network device corresponding to the target wireless network and the electronic device based on ranging detection of the NAN. Alternatively, the network device corresponding to the target wireless network can obtain the relative distance between the network device corresponding to the target wireless network and the electronic device based on the ranging detection of the NAN and then send the relative distance to the electronic device.

In the disclosure there is no limitation on the method for maintaining the call based on the preset wireless network. In at least one implementation, the call is maintained with the call peer through the preset wireless network as follows. Connection data corresponding to the call peer is transmitted to the preset wireless network, and the preset wireless network is instructed to establish a first network connection with the call peer. The preset wireless network is controlled to transfer voice information between the electronic device and the call peer through the first network connection and a second network connection between the electronic device and the preset wireless network.

The connection data may include number information of the call peer and verification information submitted by the call peer. The connection data may further include a position of the call peer, an association relationship between a user using the call peer and a user using the electronic device. The disclosure is not limited thereto.

The voice information is sound data collected by the electronic device or the call peer.

It can be understood that the electronic device transmits the connection data corresponding to the call peer to the preset wireless network, and thus the preset wireless network can establish a first network connection with the call peer according to the connection data, where the network connection between the preset wireless network and the electronic device can be determined as the second network connection. Thereafter, the preset wireless network is controlled to transfer the voice information between the electronic device and the call peer through the first network connection and the second network connection. In other words, the preset wireless network can be determined as a transfer device between the electronic device and the call peer, to transfer voice information sent by the electronic device to the call peer or voice information sent by the call peer to the electronic device, thereby avoiding the interruption of the call between the electronic device and the call peer and improving the call quality.

In at least one implementation, the preset wireless network is controlled to transfer the voice information between the electronic device and the call peer through the first network connection and the second network connection between the electronic device and the preset wireless network as follows. A first distance between a network device corresponding to the preset wireless network and the electronic device and a second distance between the network device and the call peer are obtained. An operating parameter of the network device is determined according to the first distance and the second distance. The network device is controlled to transfer the voice information through the second network connection and the first network connection according to the operating parameter.

For the manner in which the first distance is obtained, reference can be made to that the manner in which the relative distance between the preset wireless network and the electronic device is obtained. The second distance can be determined as follows. A position of the call peer is determined according to information in the connection data corresponding to the call peer, and the second distance between the call peer and the preset wireless network is obtained according to the position of the call peer.

The operating parameter may include a voltage, a current, a transmit power, a receive power, etc., which are not limited herein.

It can be understood that the first distance between the network device corresponding to the preset wireless network and the electronic device and the second distance between the network device and the call peer are obtained. The operating parameter of the network device is determined according to the first distance and the second distance. Thereafter, the network device is controlled to transfer the voice information through the second network connection and the first network connection according to the operating parameter. Since the voice information is transferred according to the operating parameter, the communication quality can be further improved.

In the method illustrated in FIG. 1, if the electronic device enters the call mode, the movement speed of the electronic device is obtained. If the movement speed is higher than the first threshold, the movement road section of the electronic device is determined. Thereafter, the target communication quality value of the electronic device is obtained according to the movement speed and the movement road section. If the target communication quality value is less than the second threshold, the electronic device connects to the preset wireless network, and maintains the call with the call peer through the preset wireless network. With aid of the method, since the electronic device and the call peer maintain the call connection state based on the preset wireless network, the call quality of the electronic device can be improved when the electronic device enters the movement road section.

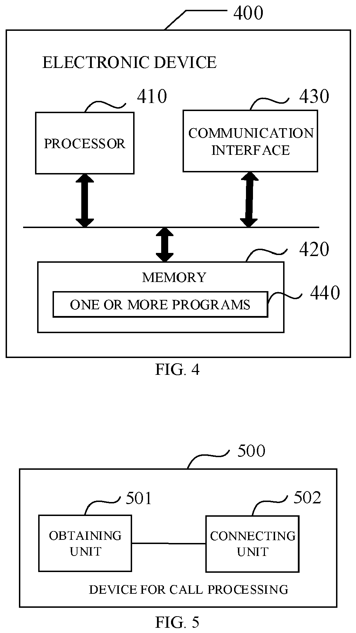

Similar to the method illustrated in FIG. 1, FIG. 4 is a schematic structural diagram illustrating an electronic device according to implementations of the disclosure. As illustrated in FIG. 4, the electronic device 400 includes a processor 410, a communication interface 430, and a memory 420 storing one or more programs 440. The one or more programs 440 are configured to be performed by the processor 410. The one or more programs 440 include instructions for performing the following operations. If the electronic device 400 enters a call mode, a movement speed of the electronic device 400 is obtained. A movement road section of the electronic device 400 is determined, in response to the movement speed being higher than a first threshold. A target communication quality value of the electronic device 400 is obtained according to the movement speed and the movement road section. Connect to a preset wireless network in response to the target communication quality value being less than a second threshold, and a call is maintained with a call peer through the preset wireless network.

It can be understood that since the electronic device 400 can maintain the call connection state with the call peer based on the preset wireless network, the call quality of the electronic device 400 can be improved when the electronic device 400 enters the movement road section.

In one example, in terms of obtaining the target communication quality value of the electronic device 400 according to the movement speed and the movement road section, instructions of the one or more programs 440 are configured to: obtain a first communication quality value of the electronic device 400 on the movement road section; obtain a communication signal influence value according to the movement speed; determine a product of the first communication quality value and the communication signal influence value as the target communication quality value.

In one example, the electronic device 400 includes multiple antennas, and in terms of obtaining the first communication quality value of the electronic device 400 on the movement road section, instructions of the one or more programs 440 are configured to: obtain a performance parameter of each of the multiple antennas to obtain multiple performance parameters; obtain an environment parameter of the movement road section; obtain a matching value between each of the multiple performance parameters and the environment parameter to obtain multiple matching values; obtain the first communication quality value according to the multiple matching values.

In one example, in terms of maintaining the call with the call peer through the preset wireless network, instructions of the one or more programs 440 are configured to: transmit connection data corresponding to the call peer to the preset wireless network, and instruct the preset wireless network to establish a first network connection with the call peer; control the preset wireless network to transfer voice information between the electronic device 400 and the call peer through the first network connection and a second network connection between the electronic device 400 and the preset wireless network.

In one example, in terms of controlling the preset wireless network to transfer the voice information between the electronic device 400 and the call peer through the first network connection and the second network connection between the electronic device 400 and the preset wireless network, instructions of the one or more programs 440 are configured to: obtain a first distance between a network device corresponding to the preset wireless network and the electronic device 400 and a second distance between the network device and the call peer; determine an operating parameter of the network device according to the first distance and the second distance; control the network device to transfer the voice information through the second network connection and the first network connection according to the operating parameter.

In one example, instructions of the one or more programs 440 are further configured to: obtain multiple reference wireless networks, where the multiple reference wireless networks are scheduled for connecting with the electronic device 400; obtain a communication quality value of each of the multiple reference wireless networks to obtain multiple second communication quality values; determine one of the multiple reference wireless networks as the preset wireless network, where the communication quality value of the one of the multiple reference wireless networks is maximum among the multiple second communication quality values.

In one example, in terms of obtaining the communication quality value of each of the multiple reference wireless networks to obtain the multiple second communication quality values, instructions of the one or more programs 440 are configured to: obtain a relative distance between a network device corresponding to each of the multiple reference wireless networks and the electronic device 400, to obtain multiple relative distances; obtain a network rate range of each of the multiple reference wireless networks according to the multiple relative distances to obtain multiple network rate ranges; obtain the multiple second communication quality values according to the multiple network rate ranges.

In one example, in terms of obtaining the movement speed of the electronic device 400, instructions of the one or more programs 440 are configured to: obtain a movement distance of the electronic device 400 within a specified duration; obtain the movement speed of the electronic device 400 according to the movement distance and the specified duration.

In one example, in terms of determining the movement road section of the electronic device 400, instructions of the one or more programs 440 are configured to: obtain a current position of the electronic device 400 and current time; obtain multiple historical movement trajectories corresponding to the current position and the current time; determine the movement road section of the electronic device 400 according to the multiple historical movement trajectories.

The foregoing implementations mainly introduce the solution of the implementation of the disclosure from the perspective of performing the process on the method side. It can be understood that the electronic device includes corresponding hardware structures and/or software modules for performing the respective functions in order to implement the above functions. Those skilled in the art will readily appreciate that the disclosure can be implemented in hardware or a combination of hardware and computer software in combination with the elements and algorithm steps of the various examples described in the implementations disclosed herein. Whether a function is implemented in hardware or computer software to drive hardware depends on the specific application and design constraints of the solution. A person skilled in the art can use different methods for each particular application to implement the described functionality, but such implementation should not be considered to be beyond the scope of the application.

In the implementations of the disclosure, the electronic device may be divided into functional units according to the method implementations. For example, the functional units may be divided according to various functions, or two or more functions may be integrated into one processing unit. The integrated unit can be implemented in the form of hardware or in the form of a software functional unit. It should be noted that the unit division in the implementation of the disclosure is illustrative and only a logical function division, and there can be other manners of division during actual implementations.

FIG. 5 is a schematic structural diagram illustrating a device for call processing according to implementations of the disclosure. The device 500 for call processing is applicable to the electronic device illustrated in FIG. 2. As illustrated in FIG. 5, the device 500 includes an obtaining unit 501 and a connecting unit 502. The obtaining unit 501 is configured to obtain a movement speed of the electronic device in response to the electronic device entering a call mode, determine a movement road section of the electronic device in response to the movement speed being higher than a first threshold, and obtain a target communication quality value of the electronic device according to the movement speed and the movement road section. The connecting unit 502 is configured to connect to a preset wireless network in response to the target communication quality value being less than a second threshold, and maintain a call with a call peer through the preset wireless network.

It can be understood that since the electronic device can maintain the call connection state with the call peer based on the preset wireless network, the call quality of the electronic device can be improved when the electronic device enters the movement road section.

In one example, in terms of obtaining the target communication quality value of the electronic device according to the movement speed and the movement road section, the obtaining unit 501 is configured to: obtain a first communication quality value of the electronic device on the movement road section; obtain a communication signal influence value according to the movement speed; determine a product of the first communication quality value and the communication signal influence value as the target communication quality value.

In one example, the electronic device includes multiple antennas, and the obtaining unit 501 configured to obtain the first communication quality value of the electronic device on the movement road section is configured to: obtain a performance parameter of each of the multiple antennas to obtain multiple performance parameters; obtain an environment parameter of the movement road section; obtain a matching value between each of the multiple performance parameters and the environment parameter to obtain multiple matching values; obtain the first communication quality value according to the multiple matching values.

In at least one implementation, the connecting unit 502 configured to maintain the call with the call peer through the preset wireless network is configured to: transmit connection data corresponding to the call peer to the preset wireless network, and instruct the preset wireless network to establish a first network connection with the call peer; control the preset wireless network to transfer voice information between the electronic device and the call peer through the first network connection and a second network connection between the electronic device and the preset wireless network.

In at least one implementation, in terms of controlling the preset wireless network to transfer the voice information between the electronic device and the call peer through the first network connection and the second network connection between the electronic device and the preset wireless network, the obtaining unit 501 is further configured to obtain a first distance between a network device corresponding to the preset wireless network and the electronic device and a second distance between the network device and the call peer, and obtain an operating parameter of the network device according to the first distance and the second distance, and the connecting unit 502 is configured to control the network device to transfer the voice information through the second network connection and the first network connection according to the operating parameter.

In at least one implementation, the obtaining unit 501 is further configured to: obtain multiple reference wireless networks, where the multiple reference wireless networks are scheduled for connecting with the electronic device; obtain a communication quality value of each of the multiple reference wireless networks to obtain a multiple second communication quality values; determine one of the multiple reference wireless networks as the preset wireless network, wherein the communication quality value of the one of the multiple reference wireless networks is maximum among the multiple second communication quality values.

In at least one implementation, the obtaining unit 501 configured to obtain the communication quality value of each of the multiple reference wireless networks to obtain the multiple second communication quality values is configured to: obtain a relative distance between a network device corresponding to each of the multiple reference wireless networks and the electronic device to obtain multiple relative distances; obtain a network rate range of each of the multiple reference wireless networks according to the multiple relative distances to obtain multiple network rate ranges; obtain the multiple second communication quality values according to the multiple network rate ranges.

In at least one implementation, the obtaining unit 501 configured to obtain the movement speed of the electronic device is configured to: obtain a movement distance of the electronic device in a specified duration; obtain the movement speed of the electronic device according to the movement distance and the specified duration.

In one example, the obtaining unit 501 configured to determine the movement road section of the electronic device is configured to: obtain a current position of the electronic device and current time; obtain multiple historical movement trajectories corresponding to the current position and the current time; determine the movement road section of the electronic device according to the multiple historical movement trajectories.

Implementations of the disclosure also provide a computer storage medium. The computer storage medium stores computer programs. The computer programs are operable with a computer to perform all or part of the operations of any of the methods described in the above-described method implementations. The computer includes an electronic device.

Implementations of the disclosure also provide a computer program product. The computer program product includes a non-transitory computer readable storage medium storing computer programs. The computer programs are operable with a computer to perform all or part of the operations of any of the methods for described in the above method implementations. The computer program product can be a software installation package. The computer includes an electronic device.

It is to be noted that, for the sake of simplicity, the foregoing method implementations are described as a series of action combinations, however, it will be appreciated by those skilled in the art that the disclosure is not limited by the sequence of actions described. According to the present disclosure, certain steps or operations may be performed in other order or simultaneously. Besides, it will be appreciated by those skilled in the art that the implementations described in the specification are exemplary implementations and the actions and modules involved are not necessarily essential to the present disclosure.

In the foregoing implementations, the description of each implementation has its own emphasis. For the parts not described in detail in one implementation, reference may be made to related descriptions in other implementations.

In the implementations of the disclosure, it should be understood that, the apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or components may be combined or may be integrated into another system, or some features may be ignored or not performed. In addition, coupling or communication connection between each illustrated or discussed component may be direct coupling or communication connection, or may be indirect coupling or communication connection among devices or units via some interfaces, and may be electrical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various implementations of the present disclosure. The memory includes various medium capable of storing program codes, such as a universal serial bus (USB) flash disk, a ROM, a RAM, a removable hard disk, a disk, a CD, or the like.

It will be understood by those of ordinary skill in the art that all or a part of the various methods of the implementations described above may be accomplished by means of a program to instruct associated hardware, the program may be stored in a computer-readable memory, which may include a flash memory, a ROM, a RAM, a disk or a CD, and so on.
The foregoing illustrates the implementations of the present disclosure in detail. The principle and implementations of the present disclosure are illustrated by specific examples. The illustration of the above implementations is merely used to facilitate understanding of the methods and core concept of the present disclosure. For a person skilled in the art, according to the concept of the present disclosure, specific implementations and application ranges may be both changed. Based on the above, the present disclosure shall not be understood to be limited to the specification.

## Claims

1. A method for call processing, performed by an electronic device, comprising:
obtaining (S101) a movement speed of the electronic device, in response to the electronic device entering a call mode;
determining (S 102) a movement road section of the electronic device, in response to the movement speed being higher than a first threshold;
obtaining (S103) a target communication quality value of the electronic device according to the movement speed and the movement road section, wherein the target communication quality value is a signal strength estimated when the electronic device moves on the movement road section at the movement speed, and indicates the ability to receive and transmit signals; and
connecting (S104) to a preset wireless network in response to the target communication quality value being less than a second threshold, and maintaining a call with a call peer through the preset wireless network;
**characterized by** the step of obtaining the target communication quality value of the electronic device according to the movement speed and the movement road section comprising:
obtaining a first communication quality value of the electronic device on the movement road section;
obtaining a communication signal influence value estimated according to the movement speed, wherein the communication signal influence value indicates an influence of the movement speed on a communication signal of the electronic device; and
determining a product of the first communication quality value and the communication signal influence value as the target communication quality value.

2. The method of claim 1, wherein the electronic device comprises a plurality of antennas, and obtaining the first communication quality value of the electronic device on the movement road section comprises:
obtaining a performance parameter of each of the plurality of antennas, and obtaining a plurality of performance parameters;
obtaining an environment parameter of the movement road section;
obtaining a matching value between each of the plurality of performance parameters and the environment parameter, and obtaining a plurality of matching values; and
obtaining the first communication quality value according to the plurality of matching values.

3. The method of claim 1 or 2, wherein maintaining the call with the call peer through the preset wireless network comprises:
transmitting connection data corresponding to the call peer to the preset wireless network, and instructing the preset wireless network to establish a first network connection with the call peer; and
controlling the preset wireless network to transfer voice information between the electronic device and the call peer through the first network connection and a second network connection between the electronic device and the preset wireless network.

4. The method of claim 3, wherein controlling the preset wireless network to transfer the voice information between the electronic device and the call peer through the first network connection and the second network connection between the electronic device and the preset wireless network comprises:
obtaining a first distance between a network device corresponding to the preset wireless network and the electronic device and a second distance between the network device and the call peer;
determining an operating parameter of the network device according to the first distance and the second distance; and
controlling the network device to transfer the voice information through the second network connection and the first network connection according to the operating parameter.

5. The method of any of claims 1 to 4, further comprising:
obtaining a plurality of reference wireless networks, wherein the plurality of reference wireless networks are scheduled for connecting with the electronic device;
obtaining a communication quality value of each of the plurality of reference wireless networks, and obtaining a plurality of second communication quality values; and
determining one of the plurality of reference wireless networks as the preset wireless network, wherein the communication quality value of the one of the plurality of reference wireless networks is maximum among the plurality of second communication quality values.

6. The method of claim 5, wherein obtaining the communication quality value of each of the plurality of reference wireless networks, and obtaining the plurality of second communication quality values comprises:
obtaining a relative distance between a network device corresponding to each of the plurality of reference wireless networks and the electronic device, and obtaining a plurality of relative distances;
obtaining a network rate range of each of the plurality of reference wireless networks according to the plurality of relative distances, and obtaining a plurality of network rate ranges; and
obtaining the plurality of second communication quality values according to the plurality of network rate ranges.

7. The method of any of claims 1 to 6, wherein obtaining the movement speed of the electronic device comprises:
obtaining a movement distance of the electronic device in a specified duration; and
obtaining the movement speed of the electronic device according to the movement distance and the specified duration.

8. The method of any of claims 1 to 7, wherein determining the movement road section of the electronic device comprises:
obtaining a current position and current time of the electronic device;
obtaining a plurality of historical movement trajectories corresponding to the current position and the current time; and
determining the movement road section of the electronic device according to the plurality of historical movement trajectories.

9. An electronic device (400), comprising:
a processor (410);
a communication interface (430); and
a memory (420) storing one or more programs (440), wherein the one or more programs are configured to be executed by the processor and comprise instructions for performing the method of any of claims 1 to 8.

10. A computer-readable storage medium storing computer programs which, when executed by an electronic device, are operable with the electronic device to perform the method of any of claims 1 to 8.

11. A computer program product comprising a non-transitory computer-readable storage medium, the non-transitory computer-readable storage medium storing computer programs which are operable with an electronic device to perform the method of any of claims 1 to 8.

## Patentansprüche

1. Verfahren zur Anrufverarbeitung, das durch eine elektronische Vorrichtung durchgeführt wird, umfassend:
Erhalten (S101) einer Bewegungsgeschwindigkeit der elektronischen Vorrichtung, als Reaktion darauf, dass die elektronische Vorrichtung in einen Anrufmodus eintritt;
Bestimmen (S102) eines Straßenabschnitts der Bewegung der elektronischen Vorrichtung, als Reaktion darauf, dass die Bewegungsgeschwindigkeit höher als eine erste Schwelle ist;
Erhalten (S103) eines Zielkommunikationsqualitätswerts der elektronischen Vorrichtung gemäß der Bewegungsgeschwindigkeit und dem Straßenabschnitt der Bewegung, wobei es sich bei dem Zielkommunikationsqualitätswert um eine Signalstärke handelt, die geschätzt wird, wenn sich die elektronische Vorrichtung auf dem Straßenabschnitt der Bewegung mit der Bewegungsgeschwindigkeit bewegt, und die Fähigkeit zum Empfangen und Übertragen von Signalen angibt; und
Verbinden (S104) mit einem voreingestellten Drahtlosnetzwerk als Reaktion darauf, dass der Zielkommunikationsqualitätswert kleiner als eine zweite Schwelle ist, und Aufrechterhalten eines Anrufs mit einem Anruf-Peer über das voreingestellte Drahtlosnetzwerk;
**dadurch gekennzeichnet, dass** der Schritt zum Erhalten des Zielkommunikationsqualitätswerts der elektronischen Vorrichtung gemäß der Bewegungsgeschwindigkeit und dem Straßenabschnitt der Bewegung umfasst:
Erhalten eines ersten Kommunikationsqualitätswerts der elektronischen Vorrichtung auf dem Straßenabschnitt der Bewegung;
Erhalten eines Kommunikationssignaleinflusswerts, der gemäß der Bewegungsgeschwindigkeit geschätzt wird, wobei der Kommunikationssignaleinflusswert einen Einfluss der Bewegungsgeschwindigkeit auf ein Kommunikationssignal der elektronischen Vorrichtung angibt; und
Bestimmen eines Produkts des ersten Kommunikationsqualitätswerts und des Kommunikationssignaleinflusswerts als den Zielkommunikationsqualitätswert.

2. Verfahren nach Anspruch 1, wobei die elektronische Vorrichtung eine Vielzahl von Antennen umfasst, und das Erhalten des ersten Kommunikationsqualitätswerts der elektronischen Vorrichtung auf dem Straßenabschnitt der Bewegung umfasst:
Erhalten eines Leistungsparameters von jeder der Vielzahl von Antennen, und Erhalten einer Vielzahl von Leistungsparametern;
Erhalten eines Umgebungsparameters des Straßenabschnitts der Bewegung;
Erhalten eines Übereinstimmungswerts zwischen jedem der Vielzahl von Leistungsparametern und dem Umgebungsparameter, und Erhalten einer Vielzahl von Übereinstimmungswerten; und
Erhalten des ersten Kommunikationsqualitätswerts gemäß der Vielzahl von Übereinstimmungswerten.

3. Verfahren nach Anspruch 1 oder 2, wobei das Aufrechterhalten des Anrufs mit dem Anruf-Peer über das voreingestellte Drahtlosnetzwerk umfasst:
Übertragen von Verbindungsdaten, die dem Anruf-Peer entsprechen, zu dem voreingestellten Drahtlosnetzwerk, und Anweisen des voreingestellten Drahtlosnetzwerks, eine erste Netzwerkverbindung mit dem Anruf-Peer zu erstellen; und
Steuern des voreingestellten Drahtlosnetzwerks, um Sprachinformationen zwischen der elektronischen Vorrichtung und dem Anruf-Peer über die erste Netzwerkverbindung und eine zweite Netzwerkverbindung zwischen der elektronischen Vorrichtung und dem voreingestellten Drahtlosnetzwerk zu übermitteln.

4. Verfahren nach Anspruch 3, wobei das Steuern des voreingestellten Drahtlosnetzwerks, um die Sprachinformationen zwischen der elektronischen Vorrichtung und dem Anruf-Peer über die erste Netzwerkverbindung und die zweite Netzwerkverbindung zwischen der elektronischen Vorrichtung und dem voreingestellten Drahtlosnetzwerk zu übermitteln, umfasst:
Erhalten eines ersten Abstands zwischen einer Netzwerkvorrichtung, die dem voreingestellten Drahtlosnetzwerk entspricht, und der elektronischen Vorrichtung und eines zweiten Abstands zwischen der Netzwerkvorrichtung und dem Anruf-Peer;
Bestimmen eines Betriebsparameters der Netzwerkvorrichtung gemäß dem ersten Abstand und dem zweiten Abstand; und
Steuern der Netzwerkvorrichtung, um die Sprachinformationen über die zweite Netzwerkverbindung und die erste Netzwerkverbindung gemäß dem Betriebsparameter zu übermitteln.

5. Verfahren nach einem der Ansprüche 1 bis 4, ferner umfassend:
Erhalten einer Vielzahl von Referenz-Drahtlosnetzwerken, wobei die Vielzahl von Referenz-Drahtlosnetzwerken zum Verbinden mit der elektronischen Vorrichtung geplant sind;
Erhalten eines Kommunikationsqualitätswerts von jedem der Vielzahl von Referenz-Drahtlosnetzwerken, und Erhalten einer Vielzahl von zweiten Kommunikationsqualitätswerten; und
Bestimmen von einem der Vielzahl von Referenz-Drahtlosnetzwerken als das voreingestellte Drahtlosnetzwerk, wobei der Kommunikationsqualitätswert des einen der Vielzahl von Referenz-Drahtlosnetzwerken ein maximaler unter der Vielzahl von zweiten Kommunikationsqualitätswerten ist.

6. Verfahren nach Anspruch 5, wobei das Erhalten des Kommunikationsqualitätswerts von jedem der Vielzahl von Referenz-Drahtlosnetzwerken und das Erhalten der Vielzahl von zweiten Kommunikationsqualitätswerten umfasst:
Erhalten eines relativen Abstands zwischen einer Netzwerkvorrichtung, die jedem der Vielzahl von Referenz-Drahtlosnetzwerken entspricht, und der elektronischen Vorrichtung, und Erhalten einer Vielzahl von relativen Abständen;
Erhalten eines Netzwerkratenbereichs von jedem der Vielzahl von Referenz-Drahtlosnetzwerken gemäß der Vielzahl von relativen Abständen, und Erhalten einer Vielzahl von Netzwerkratenbereichen; und
Erhalten der Vielzahl von zweiten Kommunikationsqualitätswerten gemäß der Vielzahl von Netzwerkratenbereichen.

7. Verfahren nach einem der Ansprüche 1 bis 6, wobei das Erhalten der Bewegungsgeschwindigkeit der elektronischen Vorrichtung umfasst:
Erhalten einer Bewegungsdistanz der elektronischen Vorrichtung in einer spezifizierten Dauer; und
Erhalten der Bewegungsgeschwindigkeit der elektronischen Vorrichtung gemäß der Bewegungsdistanz und der spezifizierten Dauer.

8. Verfahren nach einem der Ansprüche 1 bis 7, wobei das Bestimmen des Straßenabschnitts der Bewegung der elektronischen Vorrichtung umfasst:
Erhalten einer aktuellen Position und einer aktuellen Zeit der elektronischen Vorrichtung;
Erhalten einer Vielzahl von historischen Bewegungstrajektorien, die der aktuellen Position und der aktuellen Zeit entsprechen; und
Bestimmen des Straßenabschnitts der Bewegung der elektronischen Vorrichtung gemäß der Vielzahl von historischen Bewegungstrajektorien.

9. Elektronische Vorrichtung (400), umfassend:
einen Prozessor (410);
eine Kommunikationsschnittstelle (430); und
einen Speicher (420), der ein oder mehrere Programme (440) speichert, wobei das eine oder die mehreren Programme dazu ausgelegt sind, durch den Prozessor ausgeführt zu werden, und Anweisungen zum Durchführen des Verfahrens nach einem der Ansprüche 1 bis 8 umfassen.

10. Computerlesbares Speichermedium, das Computerprogramme speichert, die bei Ausführung durch eine elektronische Vorrichtung mit der elektronischen Vorrichtung betreibbar sind, um das Verfahren nach einem der Ansprüche 1 bis 8 durchzuführen.

11. Computerprogrammprodukt, das ein nichtflüchtiges computerlesbares Speichermedium umfasst, wobei das nichtflüchtige computerlesbare Speichermedium Computerprogramme speichert, die mit einer elektronischen Vorrichtung betreibbar sind, um das Verfahren nach einem der Ansprüche 1 bis 8 durchzuführen.

## Revendications

1. Procédé de traitement d'appel mis en œuvre par un dispositif électronique, comprenant :
l'obtention (S101) d'une vitesse de déplacement du dispositif électronique, en réponse au passage du dispositif électronique dans un mode d'appel ;
la détermination (S102) d'une section de route de déplacement du dispositif électronique, en réponse au fait que la vitesse de déplacement est supérieure à un premier seuil ;
l'obtention (S103) d'une valeur de qualité de communication cible du dispositif électronique en fonction de la vitesse de déplacement et de la section de route de déplacement, dans lequel la valeur de qualité de communication cible est une intensité de signal estimée lorsque le dispositif électronique se déplace sur la section de route de déplacement à la vitesse de déplacement, et indique l'aptitude à recevoir et à transmettre des signaux ; et
la connexion (S104) à un réseau sans fil prédéfini en réponse au fait que la valeur de qualité de communication cible est inférieure à un second seuil, et le maintien d'un appel avec un interlocuteur par l'intermédiaire du réseau sans fil prédéfini ;
**caractérisé par** l'étape
d'obtention de la valeur de qualité de communication cible du dispositif électronique en fonction de la vitesse de déplacement et de la section de route de déplacement, comprenant :
l'obtention d'une première valeur de qualité de communication du dispositif électronique sur la section de route de déplacement ;
l'obtention d'une valeur d'influence sur le signal de communication estimée en fonction de la vitesse de déplacement, dans lequel la valeur d'influence sur le signal de communication indique une influence de la vitesse de déplacement sur un signal de communication du dispositif électronique ; et
la détermination du produit de la première valeur de qualité de communication par la valeur d'influence sur le signal de communication en tant que valeur de qualité de communication cible.

2. Procédé selon la revendication 1, dans lequel le dispositif électronique comprend une pluralité d'antennes, et l'obtention de la première valeur de qualité de communication du dispositif électronique sur la section de route de déplacement comprend :
l'obtention d'un paramètre de performance de chacune des antennes, et l'obtention d'une pluralité de paramètres de performances ;
l'obtention d'un paramètre d'environnement de la section de route de déplacement ;
l'obtention d'une valeur de concordance entre chacun de la pluralité de paramètres de performances et le paramètre d'environnement, et l'obtention d'une pluralité de valeurs de concordance ; et
l'obtention de la première valeur de qualité de communication en fonction de la pluralité de valeurs de concordance.

3. Procédé selon la revendication 1 ou 2, dans lequel le maintien de l'appel avec l'interlocuteur par l'intermédiaire du réseau sans fil prédéfini comprend :
la transmission au réseau sans fil prédéfini de données de connexion correspondant à l'interlocuteur, et le fait d'ordonner au réseau sans fil prédéfini d'établir une première connexion réseau avec l'interlocuteur ; et
la commande du réseau sans fil prédéfini pour transférer des informations vocales entre le dispositif électronique et l'interlocuteur par l'intermédiaire de la première connexion réseau et d'une seconde connexion réseau entre le dispositif électronique et le réseau sans fil prédéfini.

4. Procédé selon la revendication 3, dans lequel la commande du réseau sans fil prédéfini pour transférer les informations vocales entre le dispositif électronique et l'interlocuteur par l'intermédiaire de la première connexion réseau et de la seconde connexion réseau entre le dispositif électronique et le réseau sans fil prédéfini comprend :
l'obtention d'une première distance entre un dispositif de réseau correspondant au réseau sans fil prédéfini et le dispositif électronique et d'une seconde distance entre le dispositif de réseau et l'interlocuteur ;
la détermination d'un paramètre de fonctionnement du dispositif de réseau en fonction de la première distance et de la seconde distance ; et
la commande du dispositif de réseau pour transférer les informations vocales par l'intermédiaire de la seconde connexion réseau et de la première connexion réseau en fonction du paramètre de fonctionnement.

5. Procédé selon l'une quelconque des revendications 1 à 4, comprenant en outre :
l'obtention d'une pluralité de réseaux sans fil de référence, dans lequel la pluralité de réseaux sans fil de référence sont programmés pour se connecter au dispositif électronique ;
l'obtention d'une valeur de qualité de communication pour chacun de la pluralité de réseaux sans fil de référence, et l'obtention d'une pluralité de secondes valeurs de qualité de communication ; et
la détermination de l'un de la pluralité de réseaux sans fil de référence comme étant le réseau sans fil prédéfini, dans lequel la valeur de qualité de communication de l'un des réseaux sans fil de référence est maximale parmi la pluralité de secondes valeurs de qualité de communication.

6. Procédé selon la revendication 5, dans lequel l'obtention de la valeur de qualité de communication de chacun des réseaux sans fil de référence, et l'obtention de la pluralité de secondes valeurs de qualité de communication comprennent :
l'obtention d'une distance relative entre un dispositif de réseau correspondant à chacun de la pluralité de réseaux sans fil de référence et au dispositif électronique, et l'obtention d'une pluralité de distances relatives ;
l'obtention d'une plage de débits de réseau de chacun de la pluralité de réseaux sans fil de référence en fonction de la pluralité de distances relatives, et l'obtention d'une pluralité de plages de débits de réseau ; et
l'obtention de la pluralité de secondes valeurs de qualité de communication en fonction de la pluralité de plages de débits de réseau.

7. Procédé selon l'une quelconque des revendications 1 à 6, dans lequel l'obtention de la vitesse de déplacement du dispositif électronique comprend :
l'obtention d'une distance de déplacement du dispositif électronique pendant une durée spécifiée ; et
l'obtention de la vitesse de déplacement du dispositif électronique en fonction de la distance de déplacement et de la durée spécifiée.

8. Procédé selon l'une quelconque des revendications 1 à 7, dans lequel la détermination de la section de route de déplacement du dispositif électronique comprend :
l'obtention d'une position actuelle et d'un temps actuel du dispositif électronique ;
l'obtention d'une pluralité de trajectoires de déplacement historiques correspondant à la position actuelle et au temps actuel ; et
la détermination de la section de route de déplacement du dispositif électronique en fonction de la pluralité de trajectoires de déplacement historiques.

9. Dispositif électronique (400), comprenant :
un processeur (410) ;
une interface de communication (430) ; et
une mémoire (420) stockant un ou plusieurs programmes (440), dans lequel lesdits un ou plusieurs programmes sont configurés pour être exécutés par le processeur et comprennent des instructions destinées à mettre en œuvre le procédé selon l'une quelconque des revendications 1 à 8.

10. Support de stockage lisible par ordinateur sur lequel sont stockés des programmes qui, lorsqu'ils sont exécutés par un dispositif électronique, sont utilisables avec le dispositif électronique pour mettre en œuvre le procédé selon l'une quelconque des revendications 1 à 8.

11. Produit de programme informatique comprenant un support de stockage non transitoire lisible par ordinateur, le support de stockage non transitoire lisible par ordinateur stockant des programmes informatiques qui sont utilisables avec un dispositif électronique pour mettre en œuvre le procédé selon l'une quelconque des revendications 1 à 8.
